# EUROPEAN PATENT APPLICATION

(11) **EP 4 311 596 A1**
(43) Date of publication of application: **31.01.2024**
(21) Application number: 23185789.7
(22) Date of filing: 17.07.2023
(51) Int. Cl.: B01D 53/94, B01J 23/63, B01J 29/68, B01J 35/00, B01J 35/04, F01N 3/035, F01N 3/10, B01J 29/76, B01J 37/02, F01N 3/08

(54) **CATALYTIC FILTER FOR GASOLINE ENGINE EXHAUST TREATMENT**

(30) Priority: 28.07.2022 US 202263369694 P
(71) Applicant: Johnson Matthey Public Limited Company, London EC4A 4AB (GB)
(72) Inventor: CHAVDA, Ketan Ravi, Royston, SG8 5HE (GB); LAKADAMYALI, Fezile, Wayne, 19087 (US)
(74) Representative: Drury, Carole

(57) **Abstract**

A catalytic wall-flow filter with improved ammonia emission control, and its use in an exhaust system for gasoline engines, are disclosed. The catalytic wall-flow filter comprises a wall-flow filter substrate; a first catalyst coated on the first plurality of channels, wherein the first catalyst comprises a zeolite; and a second catalyst coated on the second plurality of channels. The second catalyst comprises a platinum group metal (PGM) component, an oxygen storage capacity (OSC) material, and an inorganic oxide support.

## Description

### FIELD OF THE INVENTION

The present invention relates to a catalytic filter useful in treating exhaust gas emissions from gasoline engines.

### BACKGROUND OF THE INVENTION

Internal combustion engines produce exhaust gases containing a variety of pollutants, including hydrocarbons (HCs), carbon monoxide (CO), and nitrogen oxides (NOₓ). Emission control systems, including exhaust gas catalytic conversion catalysts, are widely utilized to reduce the amount of these pollutants emitted to atmosphere. A commonly used catalyst for gasoline engine exhaust treatments is the TWC (three-way catalyst). TWCs perform three main functions: (1) oxidation of CO; (2) oxidation of unbumt HCs; and (3) reduction of NOₓ. See, for example, EP0665047A1 and US20140205523A1.

In recent years, there has been increasing attention on the removal of particulate matter, and especially soot, from exhaust gas from gasoline engines. Gasoline particulate filters (GPF) can efficiently reduce the particulate matter (PM) in the exhaust gas. Most early GPF applications included an uncoated GPF positioned downstream of a three-way catalyst. Catalytic GPFs have also been used in the recent years. See, for example, and US2011/0252773A1, US2011/0158871A1, US2015/0107228A1, and US2021/0023543A1.

It has been recognized that ammonia (NH₃) is a by-product when using TWC to reduce NOₓ. Thus, NH₃ brings new pollutant emission problems, such as secondary inorganic aerosols formation, which can lead to degradation of air quality. Future emissions control legislation is expected to limit the emissions of NH₃ from gasoline engines.

To meet future regulation and to get NH₃ emission under control, others have attempted to use an ammonia slip catalyst (ASC), which is a typical emission control approach in heavy duty diesel (HDD) aftertreatment system. However, due to different compositions in fuel sources (diesel vs. gasoline) and different operating conditions (lean vs. stoichiometric), a typical ASC design does not quite work for NH₃ emission control over a stoichiometric gasoline engine. Thus, there remains a need for an improved NH₃ emission control techniques that is specifically designed to treat exhaust gas emission from a stoichiometric gasoline engine.

### SUMMARY OF THE INVENTION

One aspect of the present disclosure is directed to a catalytic wall-flow filter for treating exhaust gas from a gasoline engine, comprising:
a wall-flow filter substrate having a first end face, a second end face, a filter substrate length L defined by the distance from the first end face to the second end face, a longitudinal direction between the first end face and the second end face, first and second pluralities of channels extending in the longitudinal direction, and porous channel walls between the first plurality of channels and the second plurality of channels, wherein the first plurality of channels is open at the first end face and closed at the second end face, and the second plurality of channels is open at the second end face and closed at the first end face, and wherein the first end face is at an inlet end of the wall-flow filter substrate and the second end face is at an outlet end of the wall-flow filter substrate;
a first catalyst coated on the first plurality of channels, wherein the first catalyst comprises a zeolite; and
a second catalyst coated on the second plurality of channels, wherein the second catalyst comprises a platinum group metal (PGM) component, an oxygen storage capacity (OSC) material, and an inorganic oxide support, wherein the PGM component is selected from the group consisting of palladium, platinum, rhodium and a combination thereof.

Another aspect of the present disclosure is directed to a method for treating a vehicular exhaust gas from a gasoline engine containing NOₓ, CO, HC, ammonia, and PM using the catalytic wall-flow filter described herein.

Another aspect of the present disclosure is directed to a system for treating vehicular exhaust gas comprising the catalytic wall-flow filter described herein in conjunction with a conduit for transferring the exhaust gas through the system.

### DETAILED DESCRIPTION OF THE INVENTION

One aspect of the present disclosure is directed to a catalytic wall-flow filter for treating exhaust gas from a gasoline engine, comprising:
a wall-flow filter substrate having a first end face, a second end face, a filter substrate length L defined by the distance from the first end face to the second end face, a longitudinal direction between the first end face and the second end face, first and second pluralities of channels extending in the longitudinal direction, and porous channel walls between the first plurality of channels and the second plurality of channels, wherein the first plurality of channels is open at the first end face and closed at the second end face, and the second plurality of channels is open at the second end face and closed at the first end face, and wherein the first end face is at an inlet end of the wall-flow filter substrate and the second end face is at an outlet end of the wall-flow filter substrate;
a first catalyst coated on the first plurality of channels, wherein the first catalyst comprises a zeolite; and
a second catalyst coated on the second plurality of channels, wherein the second catalyst comprises a platinum group metal (PGM) component, an oxygen storage capacity (OSC) material, and an inorganic oxide support, wherein the PGM component is selected from the group consisting of palladium, platinum, rhodium and a combination thereof.

The wall-flow filter substrate can be a ceramic, e.g., silicon carbide, cordierite, aluminium nitride, silicon nitride, aluminium titanate, alumina, mullite, pollucite, or composites comprising segments of any two or more thereof. Cordierite, a magnesium aluminosilicate, and silicon carbide are particularly preferred.

The wall-flow filter substrate suitable for use in the present invention typically has a mean pore size of from 8 to 45 µm, for example 8 to 25 µm, 10 to 20 µm, or 10 to 15 µm. Pore size is well known in the art and appropriate measurement techniques are known to the person skilled in the art. The wall-flow filter substrate may have a porosity of 40 to 75%, such as 45 to 70% or 50 to 65%. The mean pore size and porosity can be determined using mercury porosimetry or/and x-ray tomography according to conventional methods.

The catalytic wall-flow filter comprises a first catalyst coated on the first plurality of channels, wherein the first catalyst comprises a zeolite.

The zeolite can be a silica-containing zeolite such as a siliceous zeolite. The zeolite can also be an aluminosilicate zeolite, a metal-substituted aluminosilicate zeolite, an aluminophosphate (AIPO) zeolite, a metal-substituted (MeAIPO) zeolite, a silico-aluminophosphate (SAPO), or a metal-substituted silico-aluminophosphate (MeAPSO), or a modified zeolite by Zr, P. It is preferred that the zeolite is an aluminosilicate or silico-aluminophosphate (SAPO) zeolite. More preferably, the zeolite is an aluminosilicate.

The zeolite may be microporous. The zeolite may have a framework type selected from the group of consisting of ACO, AEI, AEN, AFN, AFT, AFX, ANA, APC, APD, AST, ASV, ATT, BCT, BEA, BEC, BOF, BOG, BRE, CAN, CDO, CFI, CGS, CHA, -CHI, CON, DAC, DDR, DFT, EAB, EDI, EPI, ERI, FER, GIS, GOD, IHW, ITE, ITW, LEV, KFI, MER, MFI, MON, NSI, OWE, PAU, PHI, RHO, RTH, SAT, SAV, SIV, THO, TSC, UEI, UFI, VNI, YUG, ZON. Each of the aforementioned three-letter codes represents a framework type in accordance with the "IUPAC Commission on zeolite Nomenclature" and/or the structure Commission of the international Zeolite Association. More preferably, the zeolite has a framework type selected from AEI, BEA, CHA, FER, FAU, MFA. In some embodiments, the zeolite can be AEI, BEA, FER, or CHA. In further embodiments, the zeolite can be FER or CHA or AEI. In yet further embodiment, the zeolite can be FER. In another further embodiment, the zeolite can be AEI. In general, the zeolite may have a silica-to-alumina ratio (SAR) of from 2 to 500, preferably from 4 to 250, and more preferably from 8 to 150. In some embodiments, the zeolite is FER or CHA or AEI with SAR in the range of 8-40. In further embodiments, the zeolite is FER or CHA or AEI with SAR in the range of 10-30.

The zeolite preferably has a D90 of 7 µm, preferably 6 µm, more preferably 5 µm. D90 means that 90% in volume of the total particles are smaller than this size.

In certain embodiments, the first catalyst can further comprise a transition metal. Suitable transition metal may be selected from the group consisting of Fe, Cu, Co, Mn, Ni, Zn, Ce, Mo, Ag, and a combination of any two or more. In further embodiments, the transition metal can be selected from Ce, Mn, Cu, Co, Ni or Fe, and a combination of any two or more. In yet other embodiments, the transition metal can be Cu and/or Fe. The transition metal may be 0.01-20 wt.%; preferably 0.1-15% wt.%; more preferably 0.5-10% wt.%, relative to the weight of the zeolite.

The first catalyst can be coated to the wall-flow filter substrate by forming a first catalyst washcoat slurry and coating the wall-flow filter substrate with the first catalyst washcoat slurry.

The first catalyst washcoat slurry is typically prepared by mixing the zeolite with a solvent. For example, water can be used as the solvent. Other solvents or mixtures of water and other solvents such as alcohols may be used.

The first catalyst washcoat slurry typically has a solid content of from 15 to 40%, more preferably 20 to 35%, by weight.

The first catalyst washcoat slurry is applied to the first pluralities of channels (i.e, the inlet channels) of the wall-flow filter substrate. The first catalyst washcoat slurry may be coated by spraying and/or dipping the wall-flow filter substrate. One suitable coating procedure is described in WO1999047260. After the first catalyst washcoat slurry is coated, the coated wall flow substrate may be dried or/and calcined. Calcining may be preceded by a drying step at a lower temperature (such as 100 to 200°C). Calcining is routine in the art and may be performed under usual conditions.

The first catalyst may be primarily on the surface of the channel walls. Alternatively, at least a portion of the first catalyst may penetrate in the porous walls of the wall-flow filter substrate.

The first catalyst can be coated on the inlet channels for 100% of the filter substrate length L. In other embodiments, the first catalyst is coated for 30-90%, 40-80%, or40-60% of the filter substrate length L.

The total loading of the first catalyst in the catalytic wall-flow filter can be from 0.1 to 1.6 g/in³; preferably, can be from 0.2 to 1.0 g/in³. The loading of a catalyst (or catalyst washcoat) is the amount of the catalyst (catalyst composition) per unit volume of the whole catalytic wall-flow filter.

The catalytic wall-flow filter comprises the second catalyst coated on the second plurality of channels (i.e., the outlet channels), wherein the second catalyst comprises a platinum group metal (PGM) component, an oxygen storage capacity (OSC) material, and an inorganic oxide support, wherein the PGM component is selected from the group consisting of palladium, platinum, rhodium and a combination thereof.

In some embodiments, the second PGM component can be Pd and Rh. In other embodiments, the second PGM component can be Pt and Rh. In yet another embodiment, the second PGM component can be Pt.

The OSC material can comprise cerium oxide, zirconium oxide, a ceria-zirconia mixed oxide, an alumina-ceria-zirconia mixed oxide, or a combination thereof. More preferably, the OSC material comprises the ceria-zirconia mixed oxide, the alumina-ceria-zirconia mixed oxide, or a combination thereof. In addition, the OSC material may further comprise one or more dopants like lanthanum, neodymium, praseodymium, yttrium, etc. Moreover, the OSC material may function as a support material for the PGM component. In some embodiments, the OSC material comprises a ceria-zirconia mixed oxide or/and an alumina-ceria-zirconia mixed oxide.

The term "mixed oxide" as used herein generally refers to a mixture of oxides in a single phase, as is conventionally known in the art.

The OSC material can be from 10 to 90 wt.%, preferably 20-90 wt.%, more preferably 30-90 wt.%, relative to the total weight of the second catalyst.

The inorganic oxide support is preferably an oxide of Groups 2, 3, 4, 5, 13 and 14 elements. The inorganic oxide support is preferably selected from the group consisting of alumina, zirconia, magnesia, silica, lanthanum oxide, yttrium oxide, neodymium oxide, praseodymium oxide, and mixed oxides or composite oxides thereof. Particularly preferably, the inorganic oxide support is alumina, lanthanum oxide-containing alumina, zirconia, or a magnesia-alumina composite oxide. One especially preferred inorganic oxide support is alumina or lanthanum-containing alumina.

The term "composite oxide" as used herein generally refers to a composition of oxides having more than one phase, as is conventionally known in the art.

The OSC material and the inorganic oxide support can have a weight ratio of 10:1 to 1:10, preferably 8:1 to 1:8; more preferably 5:1 to 1:5; and most preferably 4:1 to 1:4.

In some embodiments, the second catalyst can further comprise an alkali or alkaline earth metal. The alkali or alkaline earth metal is preferably barium or/and strontium. Preferably the barium or strontium, where present, is in an amount of 0.1 to 15 wt.%, and more preferably 3 to 10 wt.% of barium or strontium, relative to the total weight of the second catalyst.

The second catalyst can be coated to outlet channels of the wall-flow filter substrate by forming a second catalyst washcoat slurry and coating the wall-flow filter substrate with the second catalyst washcoat slurry.

The second catalyst washcoat slurry is typically prepared by mixing one or more PGM component precursors (e.g., nitrates or other salts), an OSC material, and an inorganic oxide support, and a solvent. For example, water can be used as the solvent. Other solvents or mixtures of water and other solvents such as alcohols may be used.

The second catalyst washcoat slurry typically has a solid content of from 15 to 40%, more preferably 20 to 35%, by weight.

The second catalyst washcoat slurry is applied to the outlet channels of the wall-flow filter substrate. The second catalyst washcoat slurry may be coated by spraying and/or dipping the wall-flow filter substrate. One suitable coating procedure is described in WO1999047260. After the second catalyst washcoat slurry is coated, the coated wall flow substrate may be dried or /and calcined. Calcining may be preceded by a drying step at a lower temperature (such as 100 to 200°C). Calcining is routine in the art and may be performed under usual conditions.

The second catalyst may be primarily on the surface of the channel walls. Alternatively, at least a portion of the second catalyst may penetrate in the porous walls of the wall-flow filter substrate.

The second catalyst can extend for 100% of the wall-flow filter substrate length L. In other embodiments, the second catalyst can extend for 30-90%, 40-80%, or 40-60% of the wall-flow filter substrate length L.

The washcoat loading of the second catalyst can be from 0.5 to 3.5 g/in³, preferably from 0.6 to 3.5 g/in³, or more preferably from 0.7 to 3.0 g/in³.

The PGM loading in the catalytic filter is generally from 0.5 g/ft³ to 50 g/ft³, more preferably 1 g/ft³ to 10 g/ft³.

The PGM loading is the amount of the PGM per unit volume of the whole catalytic filter.

Another aspect of the present disclosure is directed to a method for treating a vehicular exhaust gas from a gasoline engine containing NOₓ, CO, HC, ammonia, and PM using the catalytic filter described herein. The catalytic filter made according to this invention showed significantly improved NH₃ control performance compared to a conventional GPF.

Another aspect of the present disclosure is directed to a system for treating vehicular exhaust gas comprising the catalytic filter described herein in conjunction with a conduit for transferring the exhaust gas through the system.

In some embodiments, the system can further comprise a TWC article (e.g., TWC catalyst coated on a flow-through substrate). In further embodiments, the TWC article is upstream of the catalytic filter described herein.

### COMPARATIVE EXAMPLE 1.

### GPF-1

GPF-1 had a TWC catalyst coating containing Pd and Rh supported on a La and Nd-doped ceria-zirconia mixed oxide (D90 <1 µm) having a ZrO₂ to CeO₂ weight ratio of about 2:1 and La-stabilized alumina (D90 = 12 µm), and a Ba promotor. The weight ratio of La and Nd-doped ceria-zirconia mixed oxide to La-stabilized alumina was 3:1. The washcoat was coated from each end face of a wall flow cordierite substrate (mean pore size = 12-18 µm; pore volume = 65%; 300 cpsi; 8 mil wall thickness) using the coating procedure described in WO1999047260. The coating length on the inlet and outlet channels are about 50% of the substrate length. It was dried at 100 °C and calcined at 500 °C for 45 mins. The washcoat loading was about 0.4 g/in³ with Pd loading of 3 g/ft³ and Rh loading of 2 g/ft³.

### COMPARATIVE EXAMPLE 2.

### GPF-2

GPF-2 was prepared in a similar manner as GPF-1, except that a Pt precursor instead of Pd precursor was used. The washcoat loading of GPF-2 was about 0.4 g/in³ with Pt loading of 5 g/ft³ and Rh loading of 2 g/ft³.

### COMPARATIVE EXAMPLE 3.

### TWC-1

TWC-1 was a three-way catalyst having a double-layered structure coated on a flow-through ceramic substrate (400 cpsi, 4.3 mil wall thickness).

The bottom layer was a washcoat containing Pd supported on a CeZr mixed oxide and a La-stabilized alumina, and Ba promotor. The washcoat loading of the bottom layer was about 2.0 g/in³ with a Pd loading of 16 g/ft³. The bottom layer was coated from each end face of the substrate using standard coating procedures with coating length from each face being about 50% of the substrate length, dried at 100 °C and calcined at 500 °C for 45mins.

The top layer was a washcoat containing Rh supported on a CeZr mixed oxide and a La-stabilized alumina. The washcoat loading of the top layer was about 1.5 g/in³ with a Rh loading of 4 g/ft³. The top layer was coated from each end face of the substrate containing the bottom layer already as described above, using standard coating procedures with coating length from each face being about 50% of the substrate length, dried at 100 °C and calcined at 500 °C for 45mins.

### EXAMPLE 4.

### CATALYTIC FILTER A

A wall-flow cordierite substrate (same as used in Comparative Example 1) was coated from inlet end with an aqueous washcoat slurry containing a zeolite material (Fe supported on a FER zeolite with 3 wt.% Fe relative to FER, SAR = 17, D90 = 7 µm), and an alumina binder (D90 = 99 µm). The weight ratio of FER to the binder is 9:2. The coating length is about 50% of the substrate length. The first washcoat loading was about 0.2 g/in³. It was then coated from the outlet face with an aqueous washcoat slurry containing La and Nd-doped ceria-zirconia mixed oxide (D90 <1 µm) having a ZrO₂ to CeO₂ weight ratio of about 2:1 and a La-stabilized alumina (D90 = 12 µm), platinum nitrate, and rhodium nitrate. The weight ratio of the ceria-zirconia mixed oxide to La-stabilized alumina was about 3:1. The second washcoat loading was about 0.2 g/in³ with Pt loading of 5 g/ft³ and Rh loading of 2 g/ft³. The coated substrate was dried at 100 °C and calcined at 500 °C for 45 mins.

### EXAMPLE 5.

### CATALYTIC FILTER B

A wall-flow cordierite substrate (same as used in Comparative Example 1) was coated from inlet end with an aqueous washcoat slurry containing a zeolite material (Fe supported on a FER zeolite with 3 wt.% Fe relative to FER, SAR = 17, D90 = 7 µm) and an alumina binder (D90 = 99 µm). The weight ratio of FER to the alumina binder is 9:2. The coating length was about 50% of the substrate length. The first washcoat loading was about 0.2 g/in³.

It was then coated from the outlet face with an aqueous washcoat slurry containing a La-stabilized alumina (D90 = 12 µm) and platinum nitrate. The second washcoat loading was about 0.2 g/in³ with Pt loading of 5 g/ft³. The coated substrate was dried at 100 °C and calcined at 500 °C for 45 mins.

### EXAMPLE 6.

### CATALYTIC FILTER C

A wall-flow cordierite substrate (same as used in Comparative Example 1) was coated from the inlet face with an aqueous washcoat slurry containing a zeolite material (Cu supported on an AEI zeolite with 3 wt.% Cu relative to AEI, SAR = 20, D90 = 6 µm) and an alumina binder (D90 = 99 µm). The weight ratio of the AEI zeolite to the alumina binder is 9:2. The coating length is about 50% of the substrate length. The first washcoat loading was about 0.4 g/in³.

It was then coated from the outlet face with an aqueous washcoat slurry containing La and Nd-doped ceria-zirconia mixed oxide (D90 < 1 µm) having a ZrO₂ to CeO₂ weight ratio of about 2:1, a La-stabilized alumina (D90 = 12 µm), platinum nitrate, and rhodium nitrate. The weight ratio of the ceria-zirconia mixed oxide to the La-stabilized alumina was 3:1. The second washcoat loading was about 0.4 g/in³ with Pt loading of 5 g/ft³ and Rh loading of 2 g/ft³. The coated substrate was dried at 100 °C and calcined at 500 °C for 45 mins.

### EXAMPLE 7.

### CATALYTIC FILTER D

A wall-flow cordierite substrate (same as used in Comparative Example 1) was coated from inlet face with an aqueous washcoat slurry containing a zeolite material (Cu supported on an AEI zeolite with 3 wt.% Cu relative to AEI, SAR = 20, D90 = 6 µm) and an alumina binder (D90 = 99 µm). The weight ratio of the AEI zeolite to the alumina binder was 9:2. The coating length is about 50% of the substrate length. The first washcoat loading was about 0.4 g/in³.

It was then coated from the outlet face with an aqueous washcoat slurry containing ceria-zirconia mixed oxide (D90 = 7 µm) and a La-stabilized alumina (D90 = 12 µm), platinum nitrate, and rhodium nitrate. The weight ratio of the ceria-zirconia mixed oxide to the La-stabilized alumina is about 3:1. The second washcoat loading was about 0.4 g/in³ with Pt loading of 5 g/ft³ and Rh loading of 2 g/ft³. The coated substrate was dried at 100 °C and calcined at 500 °C for 45 mins to obtain the catalytic filter.

### EXAMPLE 8.

### AMMONIA STORAGE TEST

Performance tests of GPF-1, GPF-2, and Catalytic Filters A, B, C, D were carried out with a synthetic exhaust gas. They were aged at 800 °C for 10 hours in an 10 wt. % water, 5 wt. % O₂, balance N₂.

An aged sample (from GPF-1, GPF-2, and Catalytic Filters A, B, C, D) was heated to 150°C and a gas feed of 400 ppm of NH₃, 10 wt. % water, balance N₂. The space velocity was 110,000 h⁻¹. The total amount of NH₃ stored at the point the filter was saturated with NH₃ was recorded.

The sample saturated with NH₃ was heated from 100°C to 500°C at 50°C per minute with a gas mixture of 300 ppm NH₃, 0.5 wt. % O₂, 300 ppm NO, balance N₂. The temperature at which NH₃ conversion reached 50% was recorded.

The test results from GPF-1, GPF-2, Catalytic Filters A, B, C, D are shown in Table 1. The ammonia storage capacities of Catalytic Filters A, B, C, D are comparable and significantly higher than that of GPF-1 or GPF-2. The NH₃ oxidation light off temperature T₅₀ for Catalytic Filter A, B, C or D is significantly lower than those of GPF-1 and GPF-2. The results show that a conventional GPF (e.g., GPF-1, GPF-2) is not as effective as Catalytic Filters A, B, C or D in reducing NH₃ emissions.

**Table 1 NH₃ Storage and Oxidation from Synthetic Exhaust**

| | Pt Loading | Pd Loading | Rh Loading | NH₃ Storage Capacity Grams per liter of filter volume | NH₃ Oxidation Light Off Temperature, T₅₀ (°C) |
|---|---|---|---|---|---|
| GPF-1 | | 3 | 2 | 0.12 | 501 |
| GPF-2 | | | | | |
| Catalytic Filter A | 5 | | 2 | | |
| Catalytic Filter B | 5 | | | 0.60 | |
| Catalytic Filter C | 5 | | 2 | 0.49 | 290 |
| Catalytic Filter D | 5 | | 2 | 0.51 | |

## Claims

1. A catalytic wall-flow filter for treating exhaust gas from a gasoline engine, comprising;
a wall-flow filter substrate having a first end face, a second end face, a filter substrate length L defined by the distance from the first end face to the second end face, a longitudinal direction between the first end face and the second end face, first and second pluralities of channels extending in the longitudinal direction, and porous channel walls between the first plurality of channels and the second plurality of channels, wherein the first plurality of channels is open at the first end face and closed at the second end face, and the second plurality of channels is open at the second end face and closed at the first end face, and wherein the first end face is at an inlet end of the wall-flow filter substrate and the second end face is at an outlet end of the wall-flow filter substrate;
a first catalyst coated on the first plurality of channels, wherein the first catalyst comprises a zeolite; and
a second catalyst coated on the second plurality of channels, wherein the second catalyst comprises a platinum group metal (PGM) component, an oxygen storage capacity (OSC) material, and an inorganic oxide support, wherein the PGM component is selected from the group consisting of palladium, platinum, rhodium and a combination thereof.

2. The catalytic wall-flow filter of claim 1, wherein the zeolite has a framework type selected from AEI, BEA, CHA, FER, FAU, MFA.

3. The catalytic wall-flow filter of claim 1, wherein the zeolite has a framework type of FER or CHA or AEI.

4. The catalytic wall-flow filter of claim 1, wherein the zeolite has a silica-to-alumina ratio (SAR) of from 8 to 150.

5. The catalytic wall-flow filter of claim 1, wherein the first catalyst further comprises a transition metal.

6. The catalytic wall-flow filter of claim 1, wherein the first catalyst further comprises a transition metal selected from the group consisting of Fe, Cu, Co, Mn, Ni, Zn, Ce, Mo, Ag, and a combination of any two or more.

7. The catalytic wall-flow filter of claim 1, wherein the first catalyst further comprises a transition metal selected from the group consisting of Ce, Mn, Cu, Co, Ni or Fe, and a combination of any two or more.

8. The catalytic wall-flow filter of claim 1, wherein the first catalyst further comprises a transition metal selected from the group consisting of Cu and Fe.

9. The catalytic wall-flow filter of claim 5, wherein the transition metal is 0.1-15% wt.% relative to the weight of the zeolite.

10. The catalytic wall-flow filter of claim 5, wherein the transition metal is 0.5-10% wt.% relative to the weight of the zeolite.

11. The catalytic wall-flow filter of claim 5, wherein the zeolite has a D90 of <7 µm.

12. The catalytic wall-flow filter of claim 1, the OSC material is cerium oxide, zirconium oxide, a ceria-zirconia mixed oxide, an alumina-ceria-zirconia mixed oxide, or a combination thereof.

13. A method for treating a vehicular exhaust gas from a gasoline engine containing NOx, CO, HC, ammonia, and PM using the catalytic filter of any of claim 1-15.

14. A system for treating vehicular exhaust gas comprising the catalytic filter of claims 1-15.

15. The system of claim 18, wherein the TWC article is upstream of the catalytic filter.
